(19) Europäisches Patentamt

European Patent Office

Office européen des brevets

(11) **EP 1 053 784 A2**

(12) **EUROPEAN PATENT APPLICATION**

(43) Date of publication:
22.11.2000 Bulletin 2000/47

(51) Int. Cl.⁷: **B01J 19/00**, B01L 3/00

(21) Application number: **00110123.7**

(22) Date of filing: **10.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **21.05.1999 DE 19923761**
**15.10.1999 DE 19949735**

(71) Applicant: **Bruker Daltonik GmbH**
**28359 Bremen (DE)**

(72) Inventors:
• **Nordhoff, Eckhard**
**14195 Berlin (DE)**
• **Eickhoff, Holger**
**27211 Bassum (DE)**
• **Schürenberg, Martin**
**27412 Tarmstedt (DE)**
• **Franzen, Jochen**
**28359 Bremen (DE)**

(54) **Processing samples in solutions having defined small contact area with support**

(57) The invention relates to the processing of very small quantities of sample, that is, the performing of chemical or enzymatic reactions, purifications, or analytic investigations, in very small quantities of liquid in the order of one microliter and less, particularly for very large numbers of samples in simultaneous processes.

The invention consists of reducing the vessel wall contact areas, which increase disproportionately with very small quantities of liquid, and have largely detrimental influences, by using standing (or suspended) droplets as microreactors for processing, whereby the droplets are supported by wetting-friendly (lyophilic) anchors in surfaces which would otherwise be hostile to wetting (lyophobic) and therefore possess a well-defined wall contact area. The anchors can be passivated in a required manner or also be made surface-active, the latter in order to support certain processing steps. It is also possible to integrate electrical, optical, fluidic, or other microstructured elements into the support in order to assist processing. The invention relates to the basic method of processing in the supported droplet and correspondingly designed supports.

Figures 1A 1B and 1C

Printed by Xerox (UK) Business Services
2.16.7 (HRS)/3.6

**Description**

*Field of invention*

The invention relates to methods and devices for the processing of very small quantities of sample, that is, the performing of chemical or enzymatic reactions, purifications, or analytic investigations, in very small quantities of liquid in the order of one microliter and less, particularly for very large numbers of samples in simultaneous processes.

*Prior art*

It is characteristic of modem biochemistry and molecular biology that hundreds or even thousands of samples are processed simultaneously. In this context "processing" very generally refers to the performing of chemical or enzymatic reactions, physical changes such as precipitation, or binding particles on surfaces, to pH-controlled, electrochemical, or thermal changes of biochemicals such as denaturation of DNA, elimination of components from solutions by washing or ion exchange, through to widely varying analytical investigations. The multitude of parallel processes may refer to a single sample, portions of which are simultaneously subjected to many different processings, for example, thousands of different SNP analyses (SNP = Single Nucleotide Polymorphism) in order to achieve detailed genotyping of the individuum from which the sample is obtained. On the other hand, there may be thousands of different samples which are simultaneously, but with strict separation, subjected to a single processing method. For instance, thousands of tissue samples of various origin are examined for a single malformed protein in order to diagnose a certain disease in a large number of patients simultaneously. Mixed forms are also possible but the characteristic feature is simultaneous but separate processing of many samples.

An evident exponent of this development is the so-called microtitre plate with its initially 96 reaction vessels, then 384 and now 1,536. In recent times a Nano-Well™ plate with 3,456 reaction vessels has been introduced. An increase in this number is only a matter of time and of the availability of the necessary tools for processing. For the conventional microtitre plates, corresponding pipetting and processing robots have been developed with storing systems for large numbers of microtitre plates, with multi-pipette stations and multiple dispenser systems.

Another evident exponent is the development of processing chips which utilize the development of electronic microchips with their increasing control of microstructures also for miniaturization of biochemical processing. Here various developments can be observed, from the relatively simple application of thousands of immobilized reaction participants such as DNA fragments or antibodies in arrays on chips through to miniaturized full laboratories on chips (the so-called "lab-on-the-chip" technology).

One example of this is the developments of DNA chips for high-parallel genetic expression analysis or for clinical diagnosis. Very high economic importance is attached to such chips in the near future. In the USA a market volume of over one billion dollars is already expected for DNA chips for the year 2001. It is to be expected that in the near future protein chips will also be manufactured which will be even more functional than DNA. Obvious applications here are antibody chips for fast, multiple diagnosis of diseases. For protein chips an equally large market is to be expected, and it may be even larger than for DNA chips.

The required quantities of sample molecules (analyte molecules) for chemical, enzymatic, and analytical processing have become smaller and smaller; the processing has long since been pushed from the nanomol range to the picomol, femtomol, and even the attomol ranges. However, a disadvantage is that as the quantities of liquid processed continue to become smaller, the proportion of the surrounding cavity surfaces become increasingly larger in relation to the volumes. This means that chemical and physical influences of the cavity walls on processing are becoming increasingly critical. A single square millimeter of wall can adsorptively bind a full picomol of biochemical analyte in a monomolecular layer and, under unfavorable conditions, completely exclude it from further treatment.

The design of the surfaces of biochemical apparatus is crucial for analytical success in biochemical trace analysis. One example of the disturbing influence of adsorptive vessel walls is the analysis by mass spectrometry of a protein from a separation by two-dimensional gel electrophoresis, although similar conditions not only prevail in proteomics but also in other fields of genetics and metabolomics.

After their separation in the gel the proteins are stained, small pieces of gel with the protein of interest are cut out or punched out around the point of staining. The pieces of gel are placed in a small vessel where they are destained. Filling up with an enzyme solution (trypsin for example) leads to a systematic digest at cutting points in the amino acid chain depending on the enzyme. When trypsin is used, the digest peptides have a mean molecular weight of approx. 1,000 atomic mass units. These peptides may diffuse in the gel, they slowly migrate by diffusion from the gel into the surrounding liquid and, after extracting a quantity of liquid and transfer to a sample support, can be examined by mass spectrometry.

Of interest are not only the highly concentrated proteins which are contained in the gel in quantities of between 10 and 100 picomol. The proteins of small concentrations which are only present in quantities of between 10 and 100 femtomol are frequently of special interest. If a digest peptide with a quantity of, for instance, 20 femtomol, passes into 20 microliters of surrounding liquid, the individual digest molecules will swim around in the liquid and also come into contact with the wall of the vessel. This quantity of liquid, 20 microliters, has a wall contact area of approx. 40 square millimeters in a small vessel with a diameter of about 3 millimeters. If the wall is adsorptive for one of the digest peptides, it can easily cover itself with this digest peptide in a monomolecular reaction. In doing so, it can absorb a total of approx. 40 picomol of digest peptides with a molecular weight of 1,000 atomic mass units in a single monomolecular covering layer, that is, about 2,000 times the amount available in the solution in our example. Even if the adsorptiveness of the vessel wall could be reduced to one thousandth by suitable measures, the digest peptide of interest would still be completely adsorbed and no further measure could be taken to put it back into the solution.

However, the example calculated here, amounting to 20 microliters of sample solution, involves a sample quantity which nowadays is regarded as large. If instead one microliter or even 100 nanoliters are used, the influences of wall contacts show another dramatic rise.

An opinion which is often heard is that the adsorptiveness of the wall could be reduced by hydrophobing. This is incorrect. To reduce adsorptiveness it is not sufficient to make the surface resistant to wetting (hydrophobic) for the analyte solution, on the contrary, hydrophobicity binds hydrophobic and amphiphilic analyte molecules to a greater extent.

The twenty amino acids of which all proteins are comprised have very different properties. Three of the amino acids are alkaline, two are acid, and of the chemically neutral amino acids, seven are hydrophilic due to OH, SH, or $CONH_2$ groups. However, eight amino acids, that is, 40% of all amino acids, are neutral and hydrophobic. They have alkylated or aromatic side chains and are lipophilic.

The digest peptides in our example will contain a more or less large portion of these hydrophobic amino acids. If the polymer chain of the peptide contains a sequence of several hydrophobic amino acids, there will be a highly predominant hydrophobicity, or at least amphiphilicity with surfactant properties. These peptides either bind themselves to one another in the form of so-called "hydrophobic bonds" and thus hydrophilize reciprocally outward (which at low concentrations only occurs to a very limited extent) or they accumulate (like surfactants) chiefly at the surface of the solution liquid. If they hit a hydrophobic wall surface, they are also adsorbed here by hydrophobic bonds. This effect is the basis of hydrophobic association chromatography.

For these hydrophobic analyte peptides it is better to use a vessel with an easily wettable surface, that is, one with a high level of hydrophilicity. This surface is generally coated with quite firmly bonded molecules of water. Consequently there is no risk of adsorption of hydrophilic analyte molecules, particularly because they are usually also surrounded with water molecules in the solution. Vessels with hydrophilic surfaces, however, present the risk of marginal contamination at the boundary area of the surface of the liquid. The hydrophilic surface leads to a constant increase in wetting and liquid creepage. Due to changes in volume, on account of slight drying for example, there may be deposits, crystallization, incrustations, or other marginal manifestations, which can only be reasonably overcome with constantly increasing liquid quantities during processing. These marginal manifestations are very disadvantageous, particularly for processing increasingly small sample quantities in increasingly small liquid quantities.

*Objective of the invention*

It is the objective of the invention to find methods and devices for the processing of samples in small quantities of liquid of about one microliter and less, which keep the size of vessel wall contact surfaces very small, but accurately define those surfaces irrespective of fluctuations in liquid volume, thus making it possible for the small vessel wall contact areas to be integrated into processing in a defined manner by means of suitable surface preparation.

*Summary of the invention*

The invention relates to methods and devices for processing sample molecules of liquids in small quantities. The invention consists of processing the sample in a droplet which is freely standing on or suspended from a wetting-friendly anchor (here very generally referred to as lyophilic) in a wetting-hostile (lyophobic) environment on a substrate.

The droplet held together by surface tension in the surrounding gas, by the lyophilic anchor on the substrate, and by the lyophobic edge of the anchor, therefore forms a microreactor for the processing. In this context the substrate is called the support. The support can, for example, be a plate with the size of a microtitre plate, but it may also be a chip, for instance, on a silicon, glass, or plastic base. Apart from the anchors the chip may also contain electronic, fluidic, or other microstructured elements. Assuming appropriate selection of droplet volume, anchor size, difference in lyophobicity between the anchor and the environment, the droplet very strictly wets only the anchor but not the lyophobic environment. By contrast with a processing method in a levitated droplet, in the method according to the invention there is a small wall area of defined size with defined wetting, which can be integrated into processing by suitable functionalization and which can handle certain tasks.

The invention concerns both the method of processing in the supported droplet and also the supports with lyophilic anchors of certain types of coating and design in a lyophobic environment as a device for this processing. The anchor should preferably be a flat part of a flat surface of the support but it may also have a convex or concave shape for special purposes. An essential feature of the invention is the physical or chemical characteristic of the wetting surface which is determined by the anchor. (Supports with lyophilic anchors in a lyophobic environment for the application of MALDI samples for mass spectrometry, but without any chemical or physical processing apart from drying, are known from DE 197 54 978.)

On a single support an exceptionally large number of microreactors according to the invention can be accommodated for processing. Even with relatively large volumes of 500 nanoliters, which produce droplets with a diameter of about one millimeter, 3,456 droplets can be accommodated on a support with the size of a microtitre plate having a grid spacing of 1.5 millimeters. Modem piezo dispensers can, however, generate well-defined droplets with much lower volumes so it is also possible to achieve much higher droplet densities. With droplets having a volume of 170 nanoliters each, which have a diameter of approx. 0.7 millimeters, it is possible to provide a coating with 6,144 microreactors at a grid spacing of 1.125 millimeters.

After the first sample application, other substances such as solvents, reaction solutions, buffers, or regulation substances have to be added to the samples, preferably without making any contact in order to exclude any additional wall contacts and associated disturbances. In principle, the following methods are suitable for this: (a) the addition of any solutions by contactless dispensing, (b) the addition of pure solvent by means of condensation from supersaturated vapor phase by the use of a moisture chamber or a distribution lid, (c) the addition of gaseous reactants or regulation substances from the ambient gaseous phase, and (d) the addition of reaction solutions or solvents by simple spraying, whereby the solution recedes from the lyophobic surfaces to the lyophilic surfaces, and therefore to the sample droplets. In the case of microdispensers, minute droplets of liquid are placed on the target substrate without making any contact, in a similar manner to that of the inkjet printing technique, whereby well defined droplets can be created with volumes of approx. 50 to 100 picoliters. Non contactless application can be accomplished (e) by simply immersing the supports, for example in order to obtain a basic application of reactants before the sample application proper, but also (f) by multiple pipette heads, (g) by stamping with "pin tools", or (h) by fluidic circuitry on the chip which can apply liquids to the droplet through the anchor. By droplet contact as described below, non contactless transfer from one support to the next with clean intermediate supports can be used without contaminating pipettes, pin tools, or fluidic supply channels. (The application of samples with multiple pin tools or multiple pipettes to MALDI sample supports of microtitre plate size is known from DE 196 28 178).

By carefully turning supports over, the then suspended droplets can also be transferred synchronously from one support to another with direct contact or by systematic shaking off, so supports with various functions of the anchors can be used successively, or non contactless supply systems can be used without any risk of contamination.

The lyophilic anchors can be functionalized in a variety of ways. For example, analyte molecules on suitably prepared anchors can be temporarily or permanently immobilized by adsorption (on C18-prepared anchors for instance), by chemical bonds, by hybridization (DNA), or by antibody bonds. In the immobilized state, they can be subjected to reactions, hybridized, enzymatically extended or shortened, or simply freed of reaction solution components by washing. However, layers can also be applied, for example, to slowly give off reactant molecules or to collect harmful reaction products or certain contaminations. For instance, ion exchangers can serve to collect metal or other cations or anions. The physical design of the anchors can also be specially prepared for analysis, for example, they can be made transparent or reflective for spectrometric analyses, or even provided with electronic, fluidic, optical, and/or micromechanical elements on a chip for methods of surface analysis or optical analytic methods.

The droplets can be prevented from drying over a lengthy period by subjecting them to saturated solvent steam. Processing of supports in open tanks tilled with wet Argon well hinders drying. With tightly fitting lids the supports can also be incubated, or even subjected to thermal cycles, for PCR amplifications for example. The lids can also be provided with devices for uniform supply of gaseous reactant or regulation substances.

Partial drying processes in dry air create very fast, irregular turbulence in the droplets, and this constitutes an extremely effective mixing process which can be utilized for the acceleration of reactions.

The samples can be analyzed in various ways, partially in the liquid state and partially in the dried state, for example by colorimetry, absorption spectrometry (also in UV or IR), fluorescence spectrometry, radiography, or mass spectrometry. In particular, very sensitive methods of surface analysis can also be used, as for example "Surface Plasmon Resonance" or "Surface Acoustic Waves".

By drying or freezing, the samples can also be made storable for a lengthy period.

*Brief description of the illustrations*

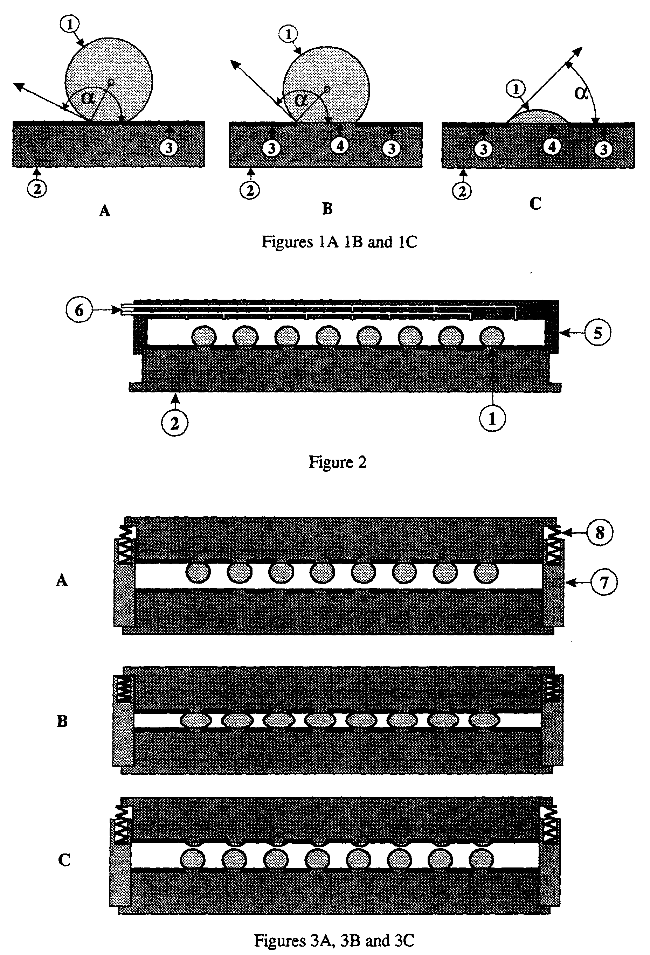

Fig. 1A shows a droplet (1) on the lyophobic surface (3) of a support (2) with the resultant contact angle $\alpha$. Fig. 1B shows a droplet (1) with the same volume on a lyophilic anchor (4), which is now completely wetted, as a result of which a smaller contact angle $\alpha$ is formed. This droplet supported on the anchor constitutes the microreactor on which the method according to the invention is based. Fig. 1C shows how a very lyophilic anchorage area is still completely wetted even if the volume of the droplet (1) has been considerably reduced, by drying for example; the contact angle $\alpha$ has thus changed very substantially. This size constancy of the wall contact area is an essential feature of the invention.

Fig. 2 shows a series of droplets (1) on lyophilic anchors of a support (2), with a lid (5), which contains a gas guidance system (6) to uniformly feed the gases or vapors to the individual droplets and to also take them away uniformly.

Fig. 3 shows the gravity-supported transfer of a large number of suspended droplets simultaneously from an upper support to a lower support. A frame (7) guides the supports and initially keeps them at the correct spacing (Fig. 3A). Compression of the springs (8) in the frame (7) creates contacts between the droplets and the lower support (Fig. 3B). After carefully releasing the tension of the springs (8) the larger parts of the former droplets are on the lower plate (Fig. 3C). The arrangement can also be used to transfer standing droplets by only turning the plate round in the compressed state (as in Fig. 3B). The sandwich arrangement as in Fig. 3B is also suitable for passing light though the droplets, for absorption spectrometry measurements for example, assuming the supports are appropriately designed.

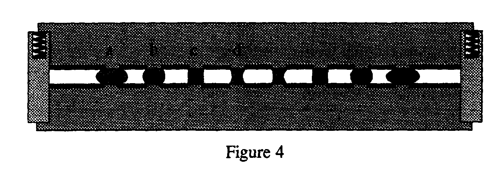

Figure 4 exhibits droplets with very different droplet volumes (a, b, c, d) in a sandwich arrangement of supports. The large droplets (a) possess a very convex surface, yielding a high vapor pressure, whereas the small droplets (d) have a rather concave surface, resulting in a lower vapor pressure. In this arrangement, the smaller droplets will, by vapor diffusion, grow on the expense of the larger droplets until an equilibrium in size and volume is reached. Keeping thus the droplet volume at a constant level is important for processing with thermocycling like PCR.

*Detailed description of the invention and preferred embodiments*

If a droplet is on a surface as in Fig. 1A with a contact angle $\alpha$ larger than 90°, i.e. if its wetting surface is smaller than the diameter of the droplet, this surface is usually referred to as being hostile to wetting for this liquid. This hostility to wetting is very generally referred to here as lyophobicity, in a broader sense of the term as used in colloid chemistry for particles in a liquid. Therefore, in this context "lyophilic" also usually means wetting-friendly and the contact angle $\alpha$ is then smaller than 90°. However, as described below, the terms "lyophobic" and "lyophilic" are used in this description of the invention only in relation to each other, without having necessarily a contact angle greater or smaller than 90°, respectively. For a wetting-hostile surface the forces of attraction of the molecules of the liquid acting on a surface molecule of the liquid are greater than the forces of attraction of the solid surface acting on that molecule. The contact angle $\alpha$ is described by the surface tension $\sigma$ of the liquid and the solid and by the boundary surface tension $\gamma$:

$$\cos \alpha = (\sigma_{\text{solid}} - \gamma_{\text{solid-liquid}})/\sigma_{\text{liquid}}$$

For very lyophobic surfaces relative to the liquid used, the wetting area is very small and the contact angle is very large - relative to the same size of droplet the wetting area is smaller than for less lyophobic surfaces. Since the surface tension of the liquid phase also depends on the size of the droplet, for small droplets the wetting area is smaller in relation to the diameter of the droplet than for larger droplets.

If the surface of the solid is provided with a wetting-friendly (lyophilic) spot, the diameter of which is larger than the wetting area of the droplet on the lyophobic surface, as shown in Fig. 1B, the droplet will wet this spot accurately and at the boundary with the lyophobic surface it will form a contact angle $\alpha$ which is smaller than the contact angle without the lyophilic spot. This lyophilic spot is referred to here as the anchor. The anchor should preferably be circular. The spot does not need to be really lyophilic in the absolute sense ($\alpha < 90°$) in order to create this effect; it is sufficient for it to be less lyophobic than the neighboring surface. Its lower lyophobicity has to have a contact angle which is smaller than that of the droplet on the spot. The terms "lyophilicity" and "lyophobicity" are thus relative to one another and the limit of 90° for the contact angle as the boundary between lyophobicity and lyophilicity does not necessarily apply here.

The invention now consists of processing the sample in a droplet of liquid which is supported by a lyophilic anchor in a lyophobic environment of a base in such a way that it completely wets the lyophilic anchor but not the lyophobic environment.

This desired wetting state can easily be achieved by making a correct selection of droplet volume, anchor size, and the difference in lyophobicity between the anchor and its environment. The volume of the droplet or microreactor can fluctuate within very wide limits, maintaining wetting conditions, as is evident from figs. 1B and 1C. The droplet is held together by surface tension. Its lyophilic anchor, the lyophobic margin around the anchor, and the gas surrounding the droplet form the microreactor for the processing, whereby the interaction between the lyophobic surrounding margin and the droplet can be neglected in practice because it only involves a few molecules in an one-dimensional border. - In the case of porous anchors, the pore volume is also included in the microreactor and the surface which is arbitrarily enlarged with the porous anchor can be used for special types of processing, like ion exchange for example, or for storing relatively large quantities of analyte molecules.

In recent times several methods for creating extremely hydrophobic surfaces have become known which can be used for this invention. Apart from the above-mentioned coating with perfluorinated substances such as PTFE (Teflon® for instance) there are coatings with a lotus effect (W. Barthlott and C. Neinhuis, "Purity of the sacred lotus, or escape from contamination in biological surfaces", Planta *202* (1997), 1) or with organic-inorganic sol-gel nanocomposite materials (DE 41 18 184), for example see R. Kasemann, H. Schmidt, S. Brück, Bol. Soc. Esp. Ceram. Vid. 31-6, Vol. 7, (1992), 75. The nanocomposite materials can be burnt on to metals, glass, or plastics as thin, scratchproof layers with a thickness of only a few micrometers. Moldings made of suitable plastics such as polyethylene can be perfluorinated at the surface in a fluorine plasma generated by electric discharge. Coatings of Teflon-like materials can also be made extremely scratchproof by adding ceramic components.

For the present invention it is important that the teaching still prevailing only a few years ago, whereby the surfaces could be divided up into a linear scale between hydrophilic (= lipophobic or oleophobic) and hydrophobic (= lipophilic or oleophilic), must nowadays be regarded as out of date. Both the perfluorinated surfaces and coverings of nanocomposite materials are not only hydrophobic but at the same time they are also lipophobic and very generally lyophobic for a series of water-containing organic solvents such as alcohols or acetonitrile, quite often used in biochemistry.

Processing generally takes place with the substrate in horizontal orientation, with the anchors on the upper side. The substrate for the lyophilic anchors on a lyophobic surface is then called a support. However, it is also possible to perform processing in suspended droplets on the underside of the substrate. We then still refer to the "support" of the droplets and their anchors.

The invention relates both to the method of processing in the anchor-bound droplet and to the supports with lyophilic anchors of certain types of coating in a lyophobic environment as a device. The support can be made of any material, for example, metal, glass, or plastic. The surface may be smooth or porous. It can also have any shape: The support can, for instance, be a thin foil, a plate the size of a microtitre plate, but also a microstructured chip. Supports with the size of microtitre plates have the advantage that they can be processed by commercially available pipetting robots. A chip, on the other hand, can also carry electronic, fluidic or other microstructures, for example to support analytical processes or electrochemical processing steps. In this way the chip can accommodate in the anchors, for example, diodes for exciting the fluorescence of analyte molecules in the microreactors and detectors for their detection. Detectors for measuring chemoluminescence, which, after adding chemicals, can detect certain analyte molecules or molecular shapes, can also be integrated. The "lab-on-the-chip" concept can be usefully expanded with the microreactors according to the invention, which can be easily loaded externally so they develop a third dimension for the concept, particularly due to the fact that a higher processing density can be created on account of the external microreactors.

It is preferable to provide the supports with automatically readable, individual codes which eliminate mistaken identity and allow a very accurate tracing and recording of the samples and their processing in the processing robots. The codes can, for example, be printed barcodes or also integrated transponders which can be read by the processing robots.

The first supply of a large number of different samples, which have to be taken from a large number of individual sample vessels from possibly several sample trays, onto the support generally takes place in pipetting robots, changing pipette tips from sample to sample, and is not unproblematic because the sample transfer generally takes a long time and the droplets may dry if there is no enclosure. But intentional drying can also be utilized to good effect, possibly in an inert gas. As a result of the drying, the support holding the samples generally becomes storable without the samples decomposing or being altered in any other way. The samples can later be processed in parallel by adding identical reaction liquids, which may take place with multiple systems simultaneously and quickly. If the samples are not storable in the dry state, they can also be applied to a cooled support on which they freeze shortly after transfer. - Also partial drying can be applied, the drying may be stopped by small amounts of hydroscopic liquids added to the samples, e. g., glycol or glycerol.

After the first sample supply, liquids generally have to be added, and sometimes gases, for example, solvents, solutions containing substances for chemical or enzymatic reactions, control substances for the processing procedure (to change the pH for example), buffer substances, etc. Further adding of substances should preferably take place without contact in order to eliminate any additional contacts with the wall and therefore associated disturbances. In principle the following methods are suitable for this:

(a) Addition of any solutions by contactless dispensing, whereby very small, but well-defined droplets of liquid in the range of 50 to 100 picoliters in volume are placed without contact on the target substrate, with piezo or solenoid microdispensers, or even bubble-jet systems, in a similar way to the ink-jet printing technique.

(b) Addition of pure solvent by means of condensation from supersaturated vapor phase by using a moisture chamber or a distribution lid described below.

(c) Addition of gaseous, soluble reactant or regulation substances (for example, ammonia, carbon dioxide, nitrogen oxides) from the ambient gaseous phase, which can also be fed through an appropriate lid system.

(d) Addition of reaction solutions or solvents by simple spraying, whereby the liquid recedes from the lyophobic surfaces onto the lyophilic surfaces and therefore to the sample droplets.

The following methods can be used to apply or add substances in a non contactless manner:

(e) Simply immersing the supports, for example, in order to obtain a basic application of reactants before the sample application proper.

(f) Synchronous pipetting using multiple pipette heads, whereby the pipette tips should preferably be highly lyophobic in order to be able to deposit the droplets efficiently.

(g) Stamping, for example with "pin tools", where the liquids are suspended from drops hanging from needle tips.

(h) Fluidic circuits on the chip, which can feed quantities of liquid to the droplet through the anchor and remove them.

The addition of liquids can take place in order to compensate for liquid losses due to evaporation and therefore to keep the volume of the generated reaction spaces constant in terms of time in order to add reactants or alter the reaction volumes at specific times. The alterability of the reaction volumes permits continuous temporal adaptation of the reaction volumes to the progress of the chemical reactions taking place in them. It is therefore possible to realize, for example, linear decreases by vaporization, exponential rises, or cyclic characteristics.

Instead of the solutions, aqueous suspensions or slurries can be applied, which, for example, contain fragments of gel (e. g. with proteins from gel-electrophoretic separations), tissue samples, viruses, cells, cell accumulations, magnetic beads with active surfaces, or small solid or gelatinous particles for affinity purification, enrichment, or surface-catalyzed metabolism.

It is an important aspect of the invention that by removing the applied droplets of liquid the reaction volumes (microreactors) also disappear again. These are thus intrinsically temporary structures and are basically different from rigid vessels. In principle, the supports can be reused if they can be adequately cleaned to remove all molecules of analyte and/or reactant.

If a large number of reaction droplets are created on a common support, the smallest distance between adjacent droplets determines their maximum extent, and therefore the maximum reaction volume. The reaction droplets can have volumes in the range of ten picoliters to a maximum of approximately ten microliters and they can be applied to one and the same support in large numbers. The position coordinates of the reaction spaces are defined by the design of the surface; on a support extraordinarily high numbers of microreactors can be accommodated for processing. Even at relatively large volumes of 500 nanoliters, which produce droplets with a diameter of one millimeter, 3,456 droplets can be accommodated on a support with the size of a microtitre plate having a grid spacing of 1.5 millimeters. Modern piezo dispensers, however, can create droplets with much smaller volumes.

The microreactors in droplet form defined here are exposed to the risk of drying out. For this reason they must be protected in a special manner, for example, by keeping the entire support in a room at saturated vapor pressure for the solvent. A simple method is to process the support plates in open tanks or troughs filled with wet Argon. Argon is more dense than air and will not escape even if wet; in contrast to wet air which immediately floats up and makes place for drier air from the environment. In general, for biochemical processing the main component of the solution will be water. In that case special care must be taken because water vapor is lighter than air, the water-saturated air tends to rise and make space for drier air.

Very small droplets have a very high vapor pressure which can go well beyond the saturation vapor pressure of the solvent. When using such tiny microreactors, special measures must therefore be taken which prevent the droplets from evaporating too rapidly even in saturated steam rooms. For example, in a known manner substances can be added to the solution which reduce the vapor pressure of the solution. In this way it is even possible to create an equilibrium with the ambient steam room in such a way that the droplet size settles and remains constant. On the other hand, it is also possible, by adding very small quantities of amphiphilic substances which do not tend to vaporize, to create a surface layer on the droplets which reduces the penetration of solvent and therefore evaporation, and possibly even prevents it.

At all events, however, it is favorable to provide the supports with tightly fitting lids while lengthy processing steps are taking place, as illustrated in fig. 2. If, for instance, thermal cycles are to take place for PCR amplifications, such lids are absolutely essential. If the space of the lid is about two millimeters above a support the size of a microtitre plate, the air in the lid space absorbs approximately 8 milligrams of water when heated from 50 to 90 degrees Celsius, which, when cooled down, is returned to the droplets again. If there are 1,536 droplets each weighing half a milligram, evaporation and recondensation are scarcely perceptible. Since, however, the vapor pressure depends on droplet size, if there is a large number of cycles, there may very easily be imbalances, in which case large droplets increase at the expense of small droplets, as described below. In such a case it may be advisable to provide the lid with subdivation chambers, each of which encloses individual groups of droplets, or even individual droplets.

In an environment of constant vapor pressure of the solvent, large drops tend to grow on expense of smaller droplets, because the smaller droplets show a higher vapor pressure. The vapor pressure is ruled by the so-called coordination number of a molecule at the surface, i. e. the average number of direct neighbors holding the molecule in the liquid. The coordination number decreases in convex surfaces, the degree of decrease being inversely proportional to the bending radius of the surface. - Normally, larger droplets have larger radii and lower vapor pressure than smaller droplets. If, however, the droplets are caught between two plates (see fig. 4) with anchors of a certain size, larger droplets are more convex than smaller droplets, and an equilibrium in size and volume will be obtained, keeping all droplets automatically at the same size. This effect can essentially be used for thermocycling in PCR amplifications, increasing at the same time the thermal contact of the droplets with the supports improving thermal balancing, thus shortening the PCR cycle times.

The lid for the supports can, however, also contain supply and discharge systems for gases and vapors, as illustrated in fig. 2. A distribution system in the lid can ensure that all the droplets are reached uniformly. For instance, ammonia, carbon dioxide, or nitrogen oxides for controlling the pH can be supplied without individual droplets being super saturated in the vicinity of a supply aperture while others are not reached at all.

By means of a partial drying process in dry air, very fast, irregular jet and eddy currents begin to flow in the droplets and they create an extremely effective mixing and agitation process which accelerates the reactions in the microreactors. In this way, all the liquid molecules in particular can be brought into contact with the anchorage surface once within a short period of time if certain surface processing steps are to take place at the anchors. The droplets, which are therefore smaller, can be replenished without contact using dispenser systems or be provided with further reactant solutions. The dry air for this process can also be fed via the distribution system in the lid, as can steam-saturated air to stop the partial drying process.

For transferring the droplets from one support to another, multiple pipettes can be used but there are also other methods available. By carefully turning supports over, possibly after freezing, the then suspended droplets can also be transferred from one support to another by direct contact aided by gravity, whereby an exact adjustment of the position and spacing can be guaranteed by a frame, as illustrated in fig. 3. A spring system in the frame with a space stop permits manual handling of carefully making contact and ensuing detachment. Turning the supports over is particularly simple if they are in the compressed state as shown in fig. 3B. One begins with standing droplets on a donor plate, moves the receiving plate into contact, from above, turns the plate sandwich over, and carefully lifts off the donor plate which is now at the top. Depending on the size of the anchors and their lyophilicity, different portions of the droplets are transferred, assisted by gravity, and a good reproducibility of the transferred volumes can be achieved.

This simultaneous transfer of a large number of droplets can also be utilized in order to apply reactant from multiple pipettes to sample-charged supports without contaminating the pipettes. With the multiple pipette the reaction solution is first applied to a clean support with lyophilic anchors and the droplets on this support are then transferred in one step to the sample-charged carrier plate by the contact transfer described. By this simple technique it is possible to continue using the conventional pipette heads with 96 or even 384 pipettes without any contamination whatsoever. It would be feasible and practical to develop pipette heads which have 1,536 pipettes. Such a development could even take advantage of the idea of this invention by providing micro structured supports with lyophilic anchors and fluidic liquid transport through the carrier plate to the anchorage areas. Since in many cases a large number of supports have to be given the same reaction fluid, such a development would be worthwhile. One example is the reaction fluid for PCR replications of DNA, which can be applied without the specific primers and is therefore identical for all PCR processes.

The compressed position of the plates, as illustrated in fig. 3B, can also be used for electrophoretic transfer of substances if liquid and any isolating layers on the anchors are suitable for avoiding electrolysis. By means of a strong electric field between the supports, surface-bound substances can be transferred from one carrier plate to another. Freely dissolved substances can be fed to the anchors of a support. Even proteins from fragments of gel can also be transferred to the anchors of a support by means of electrophoresis.

The sandwich arrangement of two supports as shown in fig. 3B (or in fig. 4) can also be used for a PCR replication, since in this way supply of heat to the droplets can be considerably accelerated.

A sandwich arrangement of two supports without droplet contact at sufficient distance from one another can also be used for contactless transfer of droplets by agitating them once. Directed acceleration and deceleration can detach the droplets with systematic synchronism due to their inertia and take them to the anchors opposite. Robots can perform these motions with a high degree of precision.

These methods for the simple transfer of droplets allow the use of supports with basically different functions. For example, a transparent support can be used for optical methods of detection and a metallic, electrically conductive support can be used for MALDI-MS analyses.

The lyophilic anchors on the supports can also be functionalized with preparations in many different ways. For instance, analyte molecules can be temporarily or permanently immobilized by adsorption, by affinity, by chemical bonds, by hybridization (DNA), or by antibody bonds. Peptides can, for example, be adsorbed from suitable buffer solutions on C 18-prepared anchors under pH control and be desorbed again by altering the pH or by organic solvents. In the immobilized state the analyte molecules can be subjected to reactions, hybridized, extended or shortened enzymatically, or simply freed of reactant solutions by washing. For example, layers can also be applied to slowly release reactant molecules or to collect toxic reaction products or certain contaminants, and ion exchangers can serve to collect cations or anions.

The immobilized molecules can, for example, be washed in a similar manner with buffer solutions, which keep them immobilized, as is known nowadays from the use of "magnetic beads". Washing can take place in individual droplets on the anchors, but also together in a bath or under a shower for all anchors simultaneously on a support.

A special type of processing is provided by making the hydrophilic anchorage areas capable of exchanging cations. The thorough removal of all cationic alcali-ions is required for mass spectrometric analysis, e. g. by MALDI ionization. This can be accomplished by a surface conditioning process which binds negatively charged groups of molecules, e.g. sulfonic acid groups ($SO_3^-$) or carbonic acid groups ($COO^-$), to the surface, or also by applying an ion-exchanging layer from a solution, or by polymerization, or sticking on a layer made from ion exchanger material. The layers may be applied as films, membranes, or coatings with fine-grain powder consisting of particles with a regular or irregular shape. They can be applied to the surface either very thinly or they can fill in small recesses in the surface in order to obtain as flat a sample support as possible.

Ion exchange material is naturally very hydrophilic so it can be ideally used to form hydrophilic anchorage areas for the sample droplets on an otherwise hydrophobic surface.

The ion exchange material used can be zeoliths, for example. These aluminium silicate structures have the advantage of not shrinking during drying. On the other hand, they only give off water or other solvents very slowly so they are not particularly suitable for maintaining the high vacuum in the MALDI ion source. More suitable are polymeric ion exchangers commercially available. They are usually based on sulfonated styrene-divinyl benzene or styrene-acrylic acid copolymers which are neutralized after regeneration with weak acids by a large number of $H^+$ ions. But if metal ions are present the copolymers absorb them immediately and exchange them for the $H^+$ ions. These porous polymeric ion exchangers are practically insoluble - they are marketed in the form of small beads or also as irregularly shaped particles with screened sizes.

Over-acidification of the sample solution by the additional $H^+$ ions can be avoided by first replacing the $H^+$ ions by ammonium ions ($NH_4^+$) in an ammonium salt solution. The ammonium ions becoming enriched in the sample solution upon sample application, which are found again in the crystal conglomerates after drying, do not interfere with the MALDI process - on the contrary, they seem to exert a favorable effect on the MALDI process.

Since some ion exchanger materials swell in liquid and shrink on drying, it may easily happen that crystals on the surface come off due to shrinkage of the substrate. It is therefore favorable that non-shrinking materials be embedded in the layer of ion exchanger material as a framework on which the crystal conglomerates can sit. Metal particles which can also create a uniform electrical potential at the surface of the MALDI plates are particularly suitable.

The anchors can also be used for other types of analyses than mass spectrometry if they have a special design. The anchors on the silicon chips can, for example, be directly laid out with electronic circuits for surface analysis methods such as "Surface Plasmon Resonance" or "Surface Acoustic Waves". For optical methods the anchors (and possibly the entire supports) can be made transparent or reflective. The samples can be analyzed in many different ways, partially in the liquid state and partially in a dried state, for example, by colorimetry, absorption spectrometry (also in UV or IR), by fluorescence spectrometry, radiography, or mass spectrometry. Certain reactions can be measured by chemoluminescence or thermoluminescence; or the DNA hybridization melting point characteristics can be measured by color changes. Especially in the compressed state as illustrated in fig. 3B a good light penetration of the droplets is possible between two transparent supports (or also supports only provided with transparent anchors), for absorption measurements for example.

By contrast with vessel-bound processing, the method presented here has the unique advantage that the wall contact area always remains the same size despite any large changes in the volume of the liquid. This prevents vessel wall rims from carrying adsorbed or crystallized residues of reaction solution due to liquid creepage, liquid drying due to the level falling, or on account of expansion-related changes in wall contact. As a result, the detection sensitivity of various detection techniques is also improved because background signals due to unspecific adsorption of sample molecules outside the area prepared for the specific attachment can be ruled out. This enhances the signal-to-noise ratio and thus detection sensitivity.

By drying or freezing, the sample droplets can also be made storable for a lengthy period. If the underside of the support is designed appropriately as a lid for the supports under it, a high packing density can be achieved for storage, as in the case of microtitre plates.

Apart from the above advantages the processing according to the invention also has the advantages of a high degree of simplicity and low cost. The processing can be largely performed on pipetting robots already available if only the supports according to the invention are available initially. The low processing volumes reduce the costs for the chemicals being used.

Let us give two examples of preferred imbodiments to illustrate processing in detail. Both examples are taken from the field of mass spectrometry but any biochemical or molecular biology expert will find it easy to apply the examples to the processing and analytical steps required by him.

The first example involves the above-mentioned process for analyzing a proteome. Firstly the proteins of a cytoplasm are separated by 2D gel electrophoresis, stained with a dye which does not disturb the ensuing digestion, and cut out of the gel in circular fragments with a diameter of 0.5 to 0.8 millimeters in an automatic device. The moist pieces of gel are automatically deposited by the cutting robot on the lyophilic anchors of a carrier plate according to the invention, where they stay in place. In a simple, not particularly refined version there are 1,536 lyophilic anchors each with a diameter of 0.8 millimeters in a highly lyophobic environment on a nickel-plated aluminum support which has the size of a microtitre plate. At the center of each uncoated nickel-plated anchor there are C18 coating spots with diameters of approx. 200 micrometers for subsequent adsorption of the digest peptides. The ring of hydrophilic nickel around the hydrophobic C18 coating guarantees contact between the liquid subsequently applied and the anchor.

The moist pieces of gel are now predried, carefully at first. The thickness of the pieces of gel shrinks. The following addition of a trypsin solution with corresponding buffers (for example, by simultaneous contact transfer from a carrier plate previously charged with a multiple pipette) causes the pieces of gel to swell again, so the digestive enzyme trypsin is taken to the proteins in the gel. Excess liquid in the total volume of 500 nanoliters causes the pieces of gel to float in the droplets, which are 1 millimeter thick.

The carrier plates are then provided with tightly fitting lids and stored in a warming cabinet at 37 degrees Celsius for about 12 hours. The proteins are digested by the trypsin, the digest peptides diffuse out of the gel, and are ultimately absorbed on the C18 island. A partial drying process at the end of the digestive period causes the droplets to be violently swirled around again so all the freely suspended peptides are collected at the C18 island. The pieces of gel are now simply washed off and the peptides washed in the adsorbed state are dried.

A solution of $\alpha$-cyano-4-hydroxy-cinnamic acid in 30% acetonitrile and water desorbs the digest peptides and integrates them into the cinnamic acid crystals serving as MALDI matrix, which form during drying. The dried carrier plate is now ready for making a MALDI time-of-flight mass scan of the digest peptides. Based on the accurately determined masses, the protein can be searched in the normal manner in a protein sequence database.

A proteome comprising approximately 4,500 proteins can be cut out automatically in about four to five hours and prepared on the three necessary supports. If digestion and extraction of the peptides is to take place over night, the digest peptides can be scanned automatically in the mass spectrometer, which takes about 12 hours using equipment currently available. Identification takes place in real time during the scanning of the next sample. Any samples which are not clearly determined can then be finally determined by recording PSD daughter ion scans of individual digest peptides, which will take about another 12 hours. According to the technique of the invention there are practically no losses due to peptides being adsorbed by the wall.

This method with processing according to the invention has the following advantages:

    1. The analysis of a proteome can be completed in about two to three days, which largely prevents the sensitive proteins, which are only kept stable in their natural environment in their cell, from decomposing and thus no longer being capable of analysis.

    2. The analysis is extremely simple, very fast, and also inexpensive due to the small volumes with small consumption of chemicals.

    3. Compared to the conventional processing in vessels there is a much higher recovery rate for the individual digest peptides of a protein. With conventional technology it was particularly the highly hydrophobic peptides which were frequently lost through influences exerted by the wall; in the mass spectrometry scan they were no longer found at all. Since proteome research increasingly concentrates on the deviations between real proteins and the sequences of protein databases, these losses of digest peptides are no longer acceptable.

The second example concerns the analysis of the genome for certain mutations, which are present as so-called SNPs (Single Nucleotide Polymorphisms). In the human genome there are at least 2 million such SNPs. They characterize predispositions for illnesses or draw attention to drug intolerance. However, they can also be used for identification purposes, to identify a criminal or the father of a child. About 40 suitably selected SNPs clearly identify a human being or an animal and constitute a genetic fingerprint.

To measure such genetic fingerprints, 1,536 lysed oral smears as DNA samples are pipetted by a pipetting robot from standard vials onto 40 carrier plates in parallel. One of the carrier plates, which have a thickness of four millimeters and are made of aluminum with a thin plating of gold and have 1,536 uncoated gold anchors in a highly lyophilic environment, serve to simultaneously measure a certain mutation in each of the 1,536 samples. A solution, which contains the polymerase for the ensuing PCR replication, the nucleotide triphosphates, and the necessary buffers and activators, is then dispensed onto all the plates. For this, the above-described technique of indirect transfer with contact supports which have been charged by multiple pipettes can be used. The mutation-specific primers are applied separately for each carrier plate, for example by a bubble-jet printer bar. The plate is covered with an aluminum lid with the same pattern of lyophilic anchors to form a sandwich arrangement. The droplets are thus caught between the plates, and an equilibrium in size of the droplets is ensured, as described above. Together with four other plates which can be processed under the same temperature conditions, the sandwich is placed on a hotplate. A second hotplate can be placed on the lids to ensure uniform warming. This sandwich arrangement is now subjected to thermal cycles of between about 50 degrees and 90 degrees Celsius, which are necessary for the PCR replication. Due to the good thermal conductivity and the low thermal mass, one cycle only takes about one and a half minutes, so that the normal 30 cycles take three quarters of an hour. The DNA samples on the 40 carrier plates can thus be amplified in this simple arrangement in about 8 hours.

Instead of using hotplates, slightly thicker support and lid plates with built-in heating and cooling systems can also be used. For example, a simple flow system for heating and cooling water can be installed in the supports and their lids. Temperature sensors can also be integrated in order to ensure good temperature control.

If the lid space is about 0.5 millimeters above the support in the size of a microtitre plate, the air in the lid space will absorb about 2 more milligrams of water when heated from 50 to 90 degrees C, which are returned to the droplets upon cooling. If there are 1,536 droplets each weighing half a milligram, evaporation and recondensation are scarcely perceived.

After PCR replication the samples on the carrier plates are transferred to new carrier plates which are provided with anchors, which in turn can bind the DNA amplificates, so that they can be washed in ion-free water and be freed of all previous reaction solution components. The subsequently dried samples are then dissolved again with an evaporable solvent (for example, with a water-acetonitrile mixture) and transferred back to the now cleaned support for PCR replication. After drying the DNA amplificates, the primer, polymerase, terminating and non terminating nucleotide triphoshates and buffers are applied for a mutation-specific primer extension which, after some further thermal cycles, leads to DNA products, the length of which is reflected by mutation. After transfer to a wash support, which is also suitable for adding the matrix for ionization by matrix-assisted laser desorption (MALDI), washing, and matrix addition, the processing is completed which, for the 40 carrier plates, takes about another 8 hours.

The samples can be scanned in a modem mass spectrometer with automatic plate feeding and a scanning rate of only two seconds, which takes about 48 hours of machine time without any labor. Consequently, 1,536 genetic fingerprints with 40 SNPs each can be scanned in only two staff shifts.

Experts are expecting this method of limited primer extension to be capable of being multiplexed; tenfold multiplexing has already been published as an example. If only four SNPs are scanned simultaneously in one processing sample, over 3,000 genetic fingerprints can be scanned in one staff shift (8 staff hours) and one machine day.

An advantage of this processing in the standing droplet, however, is not only the saving of staff time but also the saving of chemicals and enzymes. The previously used PCR reactions were restricted to minimum volumes of 5 microliters. This involves a quantity of polymerase below which it is not possible to perform and which (due to the licenses for PCR patents the fees for which are collected through the price of the polymerases) determines the price. With the processing according to the invention, though, the reaction volume, and therefore also the price of chemicals, can be reduced to one tenth or less.

Any expert in the field of microprocessing will be able, with his knowledge of this invention and its application, to realize his special requirements in terms of processing, using the basic principles stated here, even if the special type of processing has not been described here.

**Claims**

1. Method for processing sample molecules in small quantities of liquids, *wherein* the processing takes place in droplets which are standing on lyophilic anchors of an otherwise lyophobic, flat support surface or are hanging from them.

2. Method according to Claim 1, wherein the processing takes place in droplets standing and hanging between two lyophilic anchors of two opposing otherwise lyophobic and flat support surfaces.

3. Method according to one of the previous claims, wherein the lyophilic anchors take part in the processing by physical, chemical, physico-chemical, electrical, or mechanical interaction.

4. Method according to Claim 3, wherein the lyophilic anchors immobilize the sample molecules.

5. Method according to Claim 4, wherein the immobilization can be reversed by physico-chemical or electrical means.

6. Method according to Claim 3, wherein the lyophilic anchors give off substance molecules into the sample solution or remove substances from the solution.

7. Support with lyophilic anchors in a flat lyophobic environment for performing the method according to Claims 4 or 5, wherein the lyophilic anchors are coated with layers which reversibly or non reversibly bind sample molecules and can thus immobilize them at least temporarily.

8. Support with lyophilic anchors in a flat lyophobic environment for performing the method according to Claim 6, wherein the lyophilic anchors are coated with layers which give off substance molecules or ions into the solution or remove substance molecules or ions from it.

9. Support according to Claim 8, wherein the layers consist of ion exchange materials.

10. Support with lyophilic anchors in a flat lyophobic environment for performing the method according to Claims 1 to 6, wherein electrical, optical, fluidic, acoustic, or micromechanical elements are integrated into the support for processing.

11. Support with lyophilic anchors in a flat lyophobic environment for performing the method according to Claims 1 to 6, wherein the lyophilic anchors are designed as optical windows or mirrors.

12. Support with lyophilic anchors in a flat lyophobic environment for performing the method according to Claims 1 to 6, wherein the supports have a gas-tight lid.

13. Support according to Claim 12, wherein the lid contains supply and discharge lines for gases and vapors which take the supplied gases or vapors to the vicinity of each droplet.

14. Support according to Claims 7 to 13, wherein the support has the size of a microtitre plate, and the anchors form an array with distances of an integer part of 9 millimeters.

Figures 1A 1B and 1C

Figure 2

Figures 3A, 3B and 3C

Figure 4